# EUROPEAN PATENT APPLICATION

(11) **EP 2 334 120 A1**
(43) Date of publication of application: **15.06.2011**
(21) Application number: 10194146.6
(22) Date of filing: 08.12.2010
(51) Int. Cl.: H04W 48/18, H04W 4/22, H04W 48/20

(54) **Mobile terminal and method for selecting PLMN based on emergency call support indication**

(30) Priority: 14.12.2009 KR 20090123793
(71) Applicant: Pantech Co., Ltd., Seoul 121-270 (KR)
(72) Inventor: Seo, Myeong Seon, 133-050, Seoul (KR); Kim, Hasung, 120-130, Seoul (KR)
(74) Representative: Herzog, Markus

(57) **Abstract**

A terminal and a method for supporting an emergency call in a mobile terminal in which policy information regarding an emergency call may be received from a Public Land Mobile Network (PLMN) and used to select a PLMN supporting the emergency call for a current mobile terminal status and a base station of the PLMN.

## Description

### CROSS-REFERENCE TO RELATED APPLICATION

This application claims priority from and the benefit of Korean Patent Application No. 10-2009-0123793, filed on December 14, 2009, which is hereby incorporated by reference for all purposes as if fully set forth herein.

### BACKGROUND

### 1. FIELD

This disclosure relates to a terminal and a method for supporting an emergency call in a terminal.

### 2. DISCUSSION OF THE BACKGROUND

When an emergency call is to be made, a related conventional terminal repeatedly sends an emergency attach request for the emergency call to multiple base stations, searches for a Public Land Mobile Network (PLMN) which supports the emergency call for at least one of the base stations, and then camps on a base station of the found PLMN.

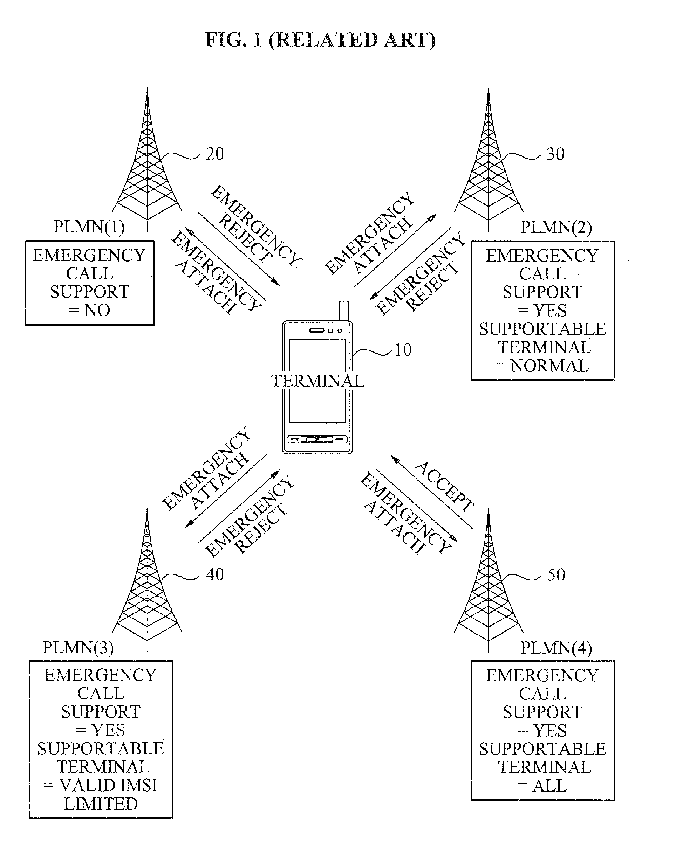

The above operation of the related conventional terminal is shown in FIG. 1. In FIG. 1, it is assumed that an invalid Subscriber Identity Module (SIM) card is inserted in a terminal 10.

The terminal 10 determines that the invalid SIM card is inserted therein, and starts to perform a related conventional emergency call processing operation. Specifically, the terminal 10 sends an "emergency attach request" message to a base station 20 that has a greatest receiving intensity among base stations 20, 30, 40, and 50 of respective PLMN (1), PLMN (2), PLMN, (3), and PLMN (4). However, the base station 20 transmits an "emergency reject" message to the terminal 10, since an emergency call is not supported by the base station 20 due to a policy of the local PLMN (1).

Subsequently, the terminal 10 sends an "emergency attach request" message to a base station 30 that has a greatest receiving intensity among the remaining base stations 30, 40, and 50. However, according to a policy of the local PLMN (2), an emergency call is supported by the base station 30 for only a normal terminal and thus, the base station 30 transmits an "emergency reject" message to the terminal 10.

The terminal 10 then sends an "emergency attach request" message to the base station 40 that has a greatest receiving intensity between the remaining base stations 40 and 50. However, according to a policy of the local PLMN (3), an emergency call is supported by the base station 40 for only a valid International Mobile Station Identity (IMSI) terminal, and thus, the base station 40 also transmits an "emergency reject" message to the terminal 10.

Subsequently, the terminal 10 sends an "emergency attach request" message to the remaining base station 50. In response to the "emergency attach request" message, the base station 50 transmits an "emergency accept" message to the terminal 10, since the base station 50 supports an emergency call for all types of terminals according to the policy of the local PLMN (4). As a result, the terminal 10 may transmit an emergency call setup request to the base station 50.

As described above, in the related conventional emergency call processing operation, the terminal 10 repeatedly sends an emergency attach request to each PLMN and to each base station of each PLMN to find a PLMN that supports an emergency call for the terminal 10 and a base station of the PLMN

In particular, when a SIM card is not inserted in the terminal 10 or when an invalid SIM card is inserted in the terminal 10, the terminal 10 may start to perform a camp-on process for a limited service even though a network registration process for a normal service has not been completed.

In other words, since the terminal 10 searches for a PLMN and a base station of the PLMN even though there is no information obtained by the network registration process, unnecessary request operations may be performed several times when an emergency call occurs.

### SUMMARY

Exemplary embodiments of the present invention provide a terminal and a method for supporting an emergency call in a mobile terminal, in which policy information regarding an emergency call may be received from a Public Land Mobile Network (PLMN) and used to select a PLMN which supports the emergency call for the mobile terminal and a base station of the selected PLMN.

Exemplary embodiments of the present invention also provide a terminal and a method for supporting an emergency call in a terminal in which policy information may be received in an existing broadcasting packet.

Additional features of the invention will be set forth in the description which follows, and in part will be apparent from the description, or may be learned by practice of the invention.

An exemplary embodiment of the present invention discloses a method for supporting an emergency call in a terminal, the method including receiving policy information regarding an emergency call from a Public Land Mobile Network (PLMN); determining whether to camp on a base station of the PLMN to obtain a limited service from the PLMN; determining whether the PLMN supports the emergency call for the terminal based on the policy information; and selecting the PLMN to camp if the PLMN supports the emergency call for the terminal.

An exemplary embodiment of the present invention discloses a terminal including a receiver to receive policy information regarding an emergency call from a Public Land Mobile Network (PLMN); a determiner to determine whether to camp on a base station of the PLMN to obtain a limited service from the PLMN; a selection processor to obtain the limited service based on the received policy information and to select the PLMN if the PLMN supports the emergency call for the terminal; and a camp-on processor to camp on the base station of the selected PLMN if the PLMN supports the emergency call for the terminal.

An exemplary embodiment of the present invention discloses a method for supporting an emergency call in a terminal, the method including receiving policy information regarding an emergency call from a Public Land Mobile Network (PLMN); and selecting the PLMN based on the policy information if the PLMN supports the emergency call for the terminal.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating a related communication network.

FIG. 2 is a block diagram illustrating a mobile terminal according to an exemplary embodiment of the present invention.

FIG. 3, FIG. 4, and FIG. 5 are flowcharts illustrating emergency call support methods according to exemplary embodiments of the present invention.

FIG. 6 is a diagram illustrating a communication network according to an exemplary embodiment of the present invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element is referred to as being "connected to" another element, it can be directly connected to the other element, or intervening elements may be present. The phrase, "at least one of A, B, and C" may be satisfied by A only, B only, C only, or any partial or full combination of A, B, and C.

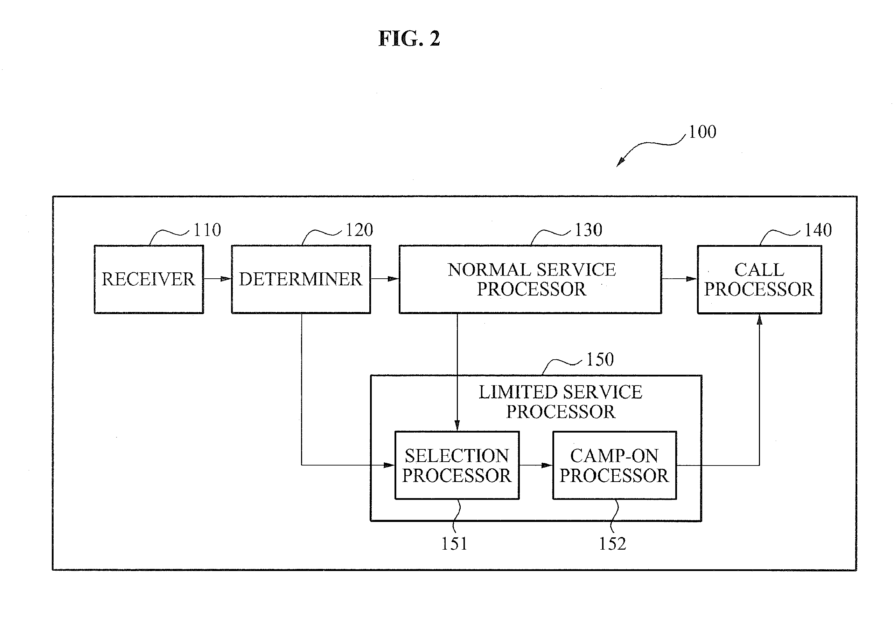

FIG. 2 illustrates a terminal 100 according to an exemplary embodiment of the present invention. Referring to FIG. 2, the terminal 100 includes a receiver 110, a determiner 120, a normal service processor 130, a call processor 140, and a limited service processor 150. The terminal 100 may be a mobile terminal.

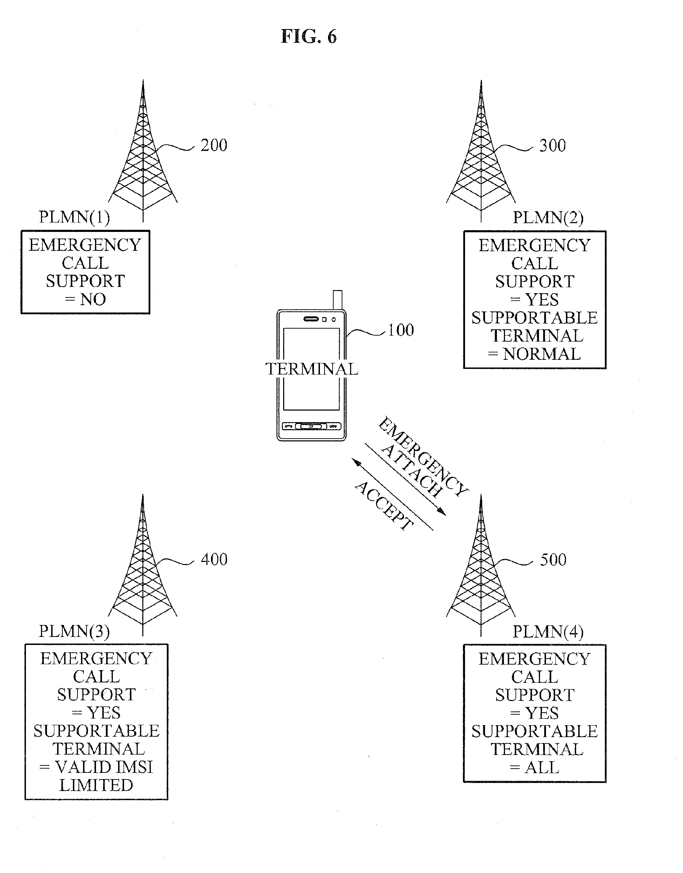

The receiver 110 may receive policy information regarding an emergency call through a broadcast channel from a mobile communication network. In this instance, since each Public Land Mobile Network (PLMN) may include policy information, the policy information may be received from a plurality of base stations 200, 300, 400, and 500, as shown in FIG. 6, of each PLMN. The policy information may include at least one of information used to support an emergency call by each PLMN, information regarding a type of terminal being supported by each PLMN, and information regarding a number of supportable terminals. Here, the type of the terminal may include, for example, a normal terminal, a valid International Mobile Station Identity (IMSI) terminal, or other terminals.

The determiner 120 may determine whether to camp to obtain a limited service, based on a current status of the terminal 100. Specifically, the determiner 120 may determine whether a valid Subscriber Identity Module (SIM) card is inserted in the terminal 100. If the valid SIM card is determined not to be inserted in the terminal 100, the determiner 120 may determine to camp.

Accordingly, if the terminal 100 is powered on, the determiner 120 may access the SIM card in the terminal 100, and may determine whether the SIM card is inserted in the terminal 100 and a validity of the SIM card.

Also, if a charge or bill of the terminal 100 remains unpaid even though the terminal 100 is enrolled in a current communication network, or if the terminal 100 has a SIM card that is not enrolled in the current communication network, the terminal 100 may fail to be registered in the current communication network. In this instance, the determiner 120 may regard that an invalid SIM card is currently inserted in the terminal 100.

The determiner 120 may acquire information regarding whether the terminal 100 is a normal terminal or a valid IMSI terminal based on information received while the terminal 100 is registered in the current communication network. The determiner 120 may acquire information concerning one of the normal terminal, the valid IMSI terminal, or other terminals, as terminal type information.

Here, the normal terminal refers to a terminal which has a valid IMSI and is successfully registered in a network to obtain a normal service. The valid IMSI terminal refers to a terminal which fails to be registered in a network even though a SIM card with a valid IMSI is inserted therein.

If the determiner 120 determines that a valid SIM card is inserted in the terminal 100, the normal service processor 130 may perform a PLMN selection process and a terminal registration process to obtain a normal service. In the terminal registration process, the normal service processor 130 may camp on a base station of a selected PLMN and register the terminal 100 in the communication network.

The call processor 140 may perform a normal service or a limited service from a base station that may be connected by the normal service processor 130 or the limited service processor 150 in response to a user's request.

When the determiner 120 determines that a SIM card is not inserted in the terminal 100, or when the terminal registration process performed by the normal service processor 130 fails, the limited service processor 150 may select a PLMN that supports the emergency call for the terminal 100 based on the policy information, and may camp on a base station of the selected PLMN

To perform the selecting and camping operations, the limited service processor 150 may include a selection processor 151 and a camp-on processor 152. The selection processor 151 may select a PLMN that supports the emergency call for the terminal 100 based on the policy information received by the receiver 110.

If a valid IMSI terminal is currently used, the selection processor 151 may select either a PLMN that supports an emergency call for the valid IMSI terminal or a PLMN that supports an emergency call for all types of terminals. Alternatively, if terminals other than the valid IMSI terminal are used, the selection processor 151 may select the PLMN which supports an emergency call for all the types of terminals.

The camp-on processor 152 may camp on a base station of the PLMN selected by the selection processor 151. In this instance, if the PLMN selected by the selection processor 151 includes a plurality of base stations, the camp-on processor 152 may camp on a base station with a greatest signal receiving intensity among the plurality of base stations.

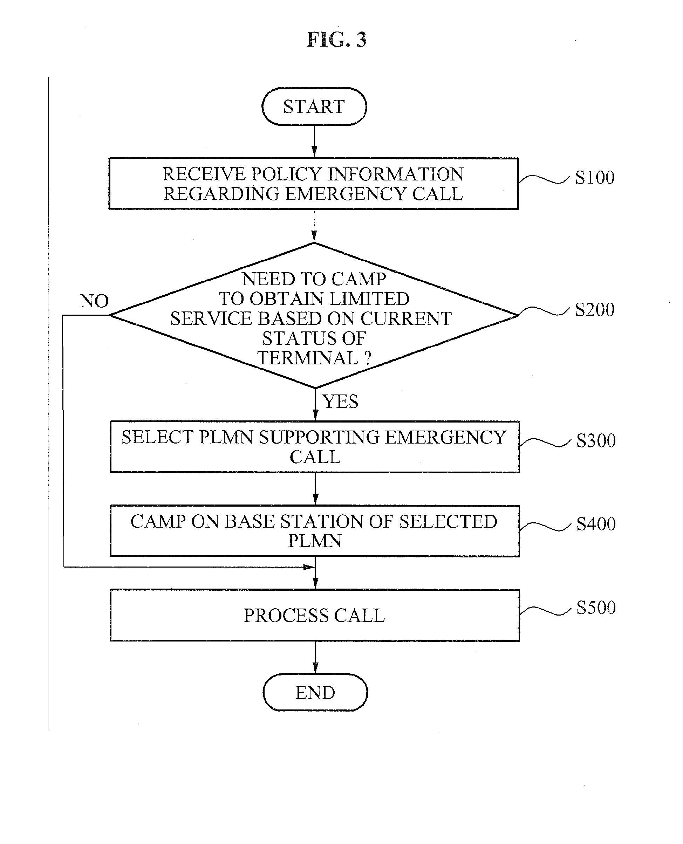

FIG. 3, FIG. 4, and 5 are flowcharts illustrating an emergency call support method according to exemplary embodiments of the present invention. FIG. 3, FIG. 4, and 5 are described with respect to FIG. 2 and FIG. 6.

Referring to FIG. 3, the receiver 110 receives policy information regarding an emergency call from the base stations 200, 300, 400, and 500 of the respective PLMN (1), PLMN (2), PLMN (3), and PLMN (4) (as shown in FIG. 6) in operation S100.

Subsequently, the determiner 120 determines whether to camp to obtain a limited service based on the current status of the terminal 100 in operation S200. Specifically, if a valid SIM card is not inserted in the terminal 100, or if an error occurs during processes of the normal service, the determiner 120 may determine to camp on.

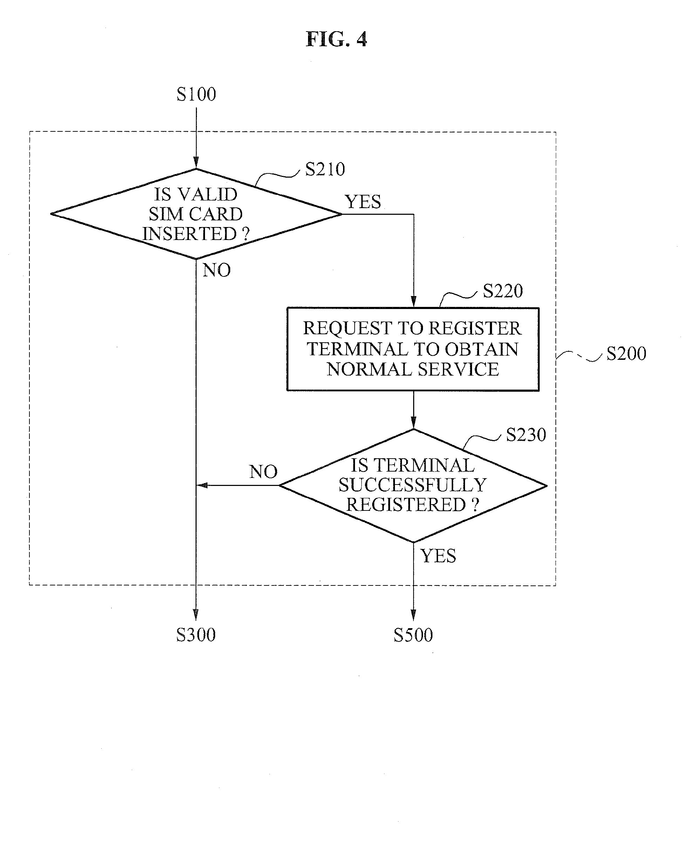

Operation S200 may include a plurality of operations, as shown in FIG. 4. Referring to FIG. 4, the determiner 120 determines whether a valid SIM card is inserted in the terminal 100 in operation S210. In the determining that a valid SIM card is not inserted in the terminal 100 in operation S210, the determiner 120 may determine to camp to obtain the limited service. Otherwise, if a valid SIM card is determined to be inserted in the terminal 100 in operation S210, the normal service processor 130 may perform the PLMN selection process and the terminal registration process, to obtain the normal service in operation S220.

Subsequently, the determiner 120 determines whether the terminal registration process is successful in operation S230. If the terminal registration process is determined to succeed in operation S230, the normal service processor 130 and the call processor 140 may perform a normal call processing operation in operation S500. If the terminal registration process is determined to fail in operation S230, the terminal 100 may camp to obtain the limited service.

The determiner 120 may acquire information regarding the type of terminal from the information received during the terminal registration process. The type of the terminal may be, for example, a normal terminal, a valid IMSI terminal, or other terminals.

Referring back to FIG. 3, if the terminal 100 is determined to camps to obtain the limited service in operation S200, the selection processor 151 may search for a PLMN which supports the emergency call for the terminal 100 based on the policy information received in operation S 100, and may select the PLMN in operation S300.

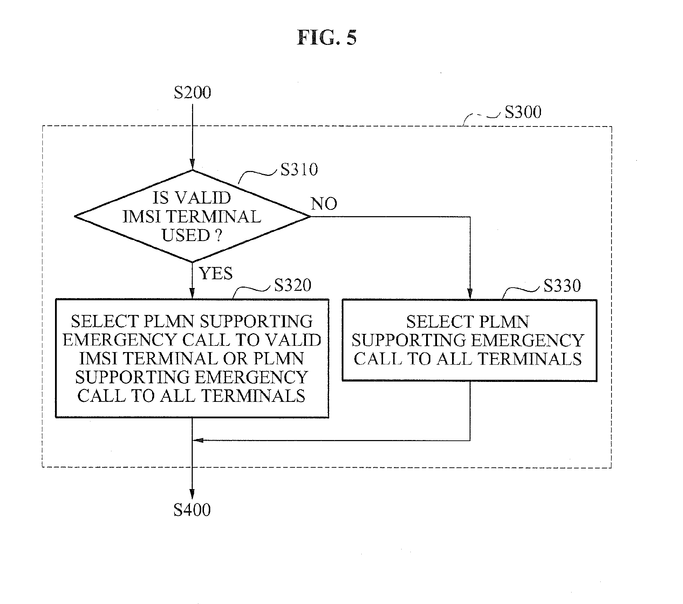

Operation S300 may include a plurality of operations, as shown in FIG. 5. Referring to FIG. 5, the selection processor 151 determines whether the terminal 100 is a valid IMSI terminal in operation S310.

If the terminal 100 is determined to be a valid IMSI terminal in operation S310, the selection processor 151 may select a PLMN that supports the emergency call for the valid IMSI terminal based on the policy information in operation S320. Otherwise, if the terminal 100 is determined to not be a valid IMSI terminal in operation S310, the selection processor 151 may select a PLMN that supports the emergency call for all the types of terminals based on the policy information in operation S330.

Referring back to FIG. 3, in operation S400, the camp-on processor 152 camps on a base station of the PLMN selected by the selection processor 151 in operation S300. In this instance, if the selected PLMN includes a plurality of base stations, the camp-on processor 152 may camp on a base station with a greatest signal receiving intensity among the plurality of base stations.

In operation S500, the call processor 140 may process the emergency call in the base station camped on by the camp-on processor 152, in response to a user's request in operation S400.

FIG. 6 illustrates an example of a communication network according to an exemplary embodiment of the present invention. Here, it is assumed that a valid SIM card is not inserted in a terminal 100 of FIG. 6, or a valid IMSI terminal is not used as the terminal 100.

Referring to FIG. 6, the terminal 100 may receive policy information from each of PLMN (1), PLMN (2), PLMN (3)and PLMN (4) through operation S100 of FIG. 3, and may select the PLMN (4), which supports an emergency call for all types of terminals, through operations S200 and S300.

Accordingly, if the terminal 100 sends an emergency attach request message to a base station of the selected PLMN (4) and receives an emergency accept message from the base station of the selected PLMN (4), failure may not occur due to a policy of the PLMN (4).

The method according to the exemplary embodiments of the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A terminal and a method for supporting an emergency call in a terminal in which policy information regarding an emergency call may be received from a Public Land Mobile Network (PLMN) and used to select a PLMN supporting the emergency call for a current terminal and a base station of the PLMN.

## Claims

1. A method for supporting an emergency call in a terminal, the method comprising:
receiving policy information regarding an emergency call from a Public Land Mobile Network (PLMN); and
either:
determining whether to camp on a base station of the PLMN to obtain a limited service from the PLMN;
determining whether the PLMN supports the emergency call for the terminal based on the policy information; and
selecting the PLMN to camp if the PLMN supports the emergency call for the terminal;
or:
selecting the PLMN based on the policy information if the PLMN supports the emergency call for the terminal.

2. The method of claim 1, further comprising camping on a base station of the selected PLMN.

3. The method of claim 1 or 2, wherein the policy information is received through a broadcast channel.

4. The method of any of claims 1 to 3, wherein the policy information comprises at least one of information used to support an emergency call by the PLMN, information regarding a type of a terminal being supported by the PLMN, and information regarding a number of supportable terminals,
the type of the terminal preferably comprising at least one of a normal terminal that is successfully registered in a current communication network to receive a normal service, a valid International Mobile Subscriber Identity (IMSI) terminal that is not registered in the current communication network and has valid IMSI information, a terminal in which a Subscriber Identity Module (SIM) card is not inserted, and a terminal in which an invalid SIM card is inserted.

5. The method of any of claims 1 to 4, wherein the base station has a greatest signal receiving intensity among base stations of the PLMN.

6. The method of any of claims 1 to 5, wherein the determining whether to camp comprises determining whether the terminal comprises a valid SIM card,
the method optionally further comprising requesting registration of the terminal in the PLMN if it is determined that the terminal comprises a valid SIM card, wherein it is preferably determined to camp if the request for registration of the terminal is unsuccessful.

7. The method of any of claims 1 to 6, wherein the determining whether to camp comprises determining whether the terminal is a valid IMSI terminal,
the selecting preferably comprising selecting the PLMN supporting emergency call to a valid IMSI terminal or the PLMN supporting emergency call to all terminals if it is determined that the terminal is a valid IMSI terminal.

8. The method of claim 7, wherein the selecting comprises selecting the PLMN supporting emergency call to all terminals if it is determined that the terminal is not a valid IMSI terminal.

9. A terminal, comprising:
a receiver to receive policy information regarding an emergency call from a Public Land Mobile Network (PLMN);
a determiner to determine whether to camp on a base station of the PLMN to obtain a limited service from the PLMN;
a selection processor to obtain the limited service based on the received policy information and to select the PLMN if the PLMN supports the emergency call for the terminal; and
a camp-on processor to camp on the base station of the selected PLMN if the PLMN supports the emergency call for the terminal.

10. The terminal of claim 9, wherein the policy information is received through a broadcast channel.

11. The terminal of claim 9 or 10, wherein the policy information comprises at least one of information used to support an emergency call by the PLMN, information regarding a type of a terminal being supported by the PLMN, and information regarding a number of supportable terminals,
the type of the terminal preferably comprising at least one of a normal terminal that is successfully registered in a current communication network to receive a normal service, a valid IMSI terminal that is not registered in the current communication network and has valid IMSI information, a terminal in which a SIM card is not inserted, and a terminal in which an invalid SIM card is inserted.

12. The terminal of any of claims 9 to 11, wherein the base station has a greatest signal receiving intensity among base stations of the PLMN.

13. The terminal of any of claims 9 to 12, wherein the determiner determines whether the terminal comprises a valid SIM card.

14. The terminal of any of claims 9 to 13, wherein the determiner determines whether the terminal is a valid IMSI terminal.
